# EUROPÄISCHE PATENTSCHRIFT

(11) **EP 3 099 738 B1**
(45) Veröffentlichungstag und Bekanntmachung des Hinweises auf die Patenterteilung: **29.11.2017**
(21) Anmeldenummer: 15701212.1
(22) Anmeldetag: 26.01.2015
(51) Int. Cl.: C08L 23/00, C08L 77/00

(54) **POLYOLEFINCOPOLYMERE ALS FARBVERBESSERER IN POLYAMIDEN**
POLYOLEFIN COPOLYMERS AS COLOUR IMPROVERS IN POLYAMIDES
COPOLYMÈRES DE POLYOLÉFINE COMME AGENTS D'AMÉLIORATION DES COULEURS DANS DES POLYAMIDES

(30) Priorität: 27.01.2014 EP 14152712
(43) Veröffentlichungstag der Anmeldung: 07.12.2016
(73) Patentinhaber: BASF SE, 67056 Ludwigshafen am Rhein (DE)
(72) Erfinder: SCHMIDT, Christian, 67061 Ludwigshafen (DE); RICHTER, Florian, 68159 Mannheim (DE); CLAUSS, Joachim, 64297 Darmstadt (DE); WOLLNY, Andreas, 67251 Freinsheim (DE); DESBOIS, Philippe, 68535 Edingen-Neckarhausen (DE); EL-TOUFAILI, Faissal-Ali, 67063 Ludwigshafen (DE); STAMMER, Achim, 67251 Freinsheim (DE); SCHWIEGK, Stefan, 67433 Neustadt (DE)
(74) Vertreter: BASF IP Association
(86) Internationale Anmeldenummer: PCT/EP2015/051476
(87) Internationale Veröffentlichungsnummer: WO 2015/110629

(56) Entgegenhaltungen:
- EP-A1- 0 558 048
- WO-A1-2005/121249
- WO-A1-2011/051123
- WO-A2-2009/056583
- BIGGER S W ET AL: "Colour changes in pigmented Nylon-6 systems containing copper iodide", POLYMER DEGRADATION AND STABILITY, BARKING, GB, Bd. 93, Nr. 9, 1. September 2008 (2008-09-01), Seiten 1711-1714, XP025349826, ISSN: 0141-3910 [gefunden am 2008-06-18]
- SCAFFARO R ET AL: "Preparation and characterization of polyamide 6/polyethylene blend-clay nanocomposites in the presence of compatibilisers and stabilizing system", POLYMER DEGRADATION AND STABILITY, BARKING, GB, Bd. 95, Nr. 12, 1. Dezember 2010 (2010-12-01), Seiten 2547-2554, XP027527417, ISSN: 0141-3910 [gefunden am 2010-11-25]

## Beschreibung

Die vorliegende Erfindung betrifft die Verwendung von Polyolefincopolymeren zur Verminderung von Farbveränderungen beim Erhitzen von Polymerzusammensetzungen, die wenigstens ein thermoplastisches Polyamid enthalten, die Verwendung dieser Polymerzusammensetzungen sowie ein Verfahren zur Verminderung von Farbveränderungen in Polyamid-haltigen Polymerzusammensetzungen.

### STAND DER TECHNIK

Polyamide gehören zu den weltweit in großem Umfang hergestellten Polymeren und dienen neben den Hauptanwendungsbereichen Folien, Fasern und Werkstoffen einer Vielzahl weiterer Verwendungszwecke. Unter den Polyamiden sind das Polyamid 6 (Polycaprolactam) und das Polyamid 66 (Nylon, Polyhexamethylenadipinsäureamid) die am meisten hergestellten Polymere. Eine weitere wichtige Gruppe der Polyamide sind teilkristalline oder amorphe, thermoplastische, teilaromatische Polyamide, die als wichtige technische Kunststoffe breite Verwendung gefunden haben. Sie zeichnen sich insbesondere durch ihre hohe Temperaturbeständigkeit aus und werden auch als Hochtemperatur-Polyamide (HTPA) bezeichnet. Polyamide werden üblicherweise mit den bekannten Formgebungsverfahren für Thermoplaste wie Spritzguss, Extrusion und Folienblasen verarbeitet. Hochtemperatur-Polyamide weisen jedoch verhältnismäßig hohe Schmelzpunkte, beispielsweise etwa 290°C oder darüber, auf, während aliphatische Polyamide wie Polyamid 66 bei etwa 260 bis 265°C schmelzen.

Durch Zugabe von Additiven lassen sich die mechanischen Eigenschaften von Polyamiden verbessern. Es ist bekannt, dass der Zusatz von Kautschuken (oft auch als Elastomere, kautschukelastische Polymerisate bezeichnet), die Schlagzähigkeit von Polyamiden verbessert. US 5,436,294 beschreibt schlagzäh-modifizierte Polyphthalamid-Compounds, enthaltend als Schlagzähmodifier mit Maleinanhydrid modifizierte Blockcopolymere aus Styrol- und Polyolefinblöcken. Die WO 2005/121249 beschreibt Polyamid-Formmassen mit verbesserter Fließfähigkeit und Schlagzähigkeit, enthaltend ein teilkristallines thermoplastisches Polyamid und ein Copolymerisat aus einem Olefin mit (Meth)acrylsäureestern aliphatischer Alkohole. Die WO 2011/051123 beschreibt wärmealterungsbeständige Polyamide, die als Wärmestabilisator Eisenpulver und als Schlagzähmodifier kautschukelastische Polymerisate enthalten. Bei den kautschukelastischen Polymerisate handelt es sich um Polyolefincopolymere, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 Kohlenstoffatomen in der Alkoholkomponente.

Eine Verwendung von Polyolefincopolymeren zur Farbverbesserung in Polyamiden ist im Stand der Technik nicht beschrieben.

Werden amorphe Polyamide höheren Temperaturen oberhalb ihrer Glasübergangstemperatur bzw. teilkristalline Polyamide höheren Temperaturen im Bereich ihrer Schmelztemperatur ausgesetzt, so treten in der Regel Vergilbung bzw. Braunfärbung auf. Diese Verfärbung kann z. B. durch den Gelbindex (Yellowness Index YI) ausgedrückt werden. Die Verfärbung ist nachteilig, da sie den gewünschten Farbton der Polyamid-Zusammensetzungen verfälscht (mangelnde Farbtreue) oder die Verwendung größerer Mengen teurer Farbmittel erfordert (höhere Einfärbekosten).

Zur Verringerung der Vergilbung und Aufhellung von Polyamiden schlagen EP 1375578 und WO 2006/135841 die Verwendung von Titandioxid vor. Die Zugabe von Titandioxid führt jedoch zu einer Verringerung der Schlagzähigkeit von Polyamiden.

In WO 2009/056583 werden flammgeschützte Polyamid-Zusammensetzungen mit verbesserter Farbstabilität beschrieben, die Phosphinsalze, Phenolstabilisatoren und/oder Phosphit- und Phosphonitstabilisatoren enthalten. Die Polyamid-Zusammensetzungen zeigen eine deutliche Eigenfarbe.

WO 2000/078869 beschreibt Stabilisator-Zusammensetzungen, die Kupfer(I)-halogenid und ein Alkalimetallhalogenid umfassen, zur Anwendung in Hochtemperaturpolyamiden. Auch derartige Polyamide zeigen eine deutliche Gelbfärbung.

Der vorliegenden Erfindung lag die Aufgabe zu Grunde, Polymerzusammensetzungen, die ein thermoplastisches Polyamid enthalten, mit verbessertem Gelbindex zur Verfügung zu stellen. Des Weiteren sollen die Polymerzusammensetzungen einen verbesserten Weißgrad aufweisen. Weiterhin bestand die Aufgabe, Polymerzusammensetzungen bereitzustellen, deren geringe Eigenfarbe nicht auf Kosten ihrer anderen vorteilhaften Eigenschaften, beispielsweise mechanische Eigenschaften wie Zähigkeit erzielt wird.

Überraschenderweise wurde gefunden, dass diese Aufgabe durch die erfindungsgemäße Verwendung eines Polyolefincopolymers A) in einer Polymerzusammensetzung, die ein thermoplastisches Polyamid B) enthält, gelöst wird.

### ZUSAMMENFASSUNG DER ERFINDUNG

Ein erster Gegenstand ist die Verwendung von Polyolefincopolymeren A) zur Verminderung von Farbveränderungen von Polymerzusammensetzungen, die wenigstens ein thermoplastisches Polyamid B) enthalten, wobei das Polyolefincopolymer A) wenigstens ein ethylenisch ungesättigtes Monomere Ma und wenigstens ein monoethylenisch ungesättigtes Monomer Mb einpolymerisiert enthält, wobei
Monomer Ma ausgewählt ist unter
- C₂-C₁₀-Alkenen; und
- vinylaromatischen Verbindungen der Formel I 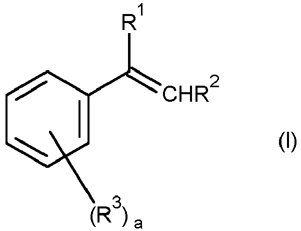 worin
   - R¹ und R²: unabhängig voneinander ausgewählt sind unter Wasserstoff, C₁-C₁₀-Alkyl, C₃-C₁₂-Cycloalkyl und Phenyl, wobei C₃-C₁₂-Cycloalkyl und Phenyl unsubstituiert sind oder ein- oder mehrfach durch C₁-C₁₀-Alkyl substituiert sind;
   - R³: für C₁-C₁₀-Alkyl, C₃-C₁₂-Cycloalkyl und Phenyl steht, wobei C₃-C₁₂-Cycloalkyl und Phenyl unsubstituiert sind oder ein- oder mehrfach durch C₁-C₁₀-Alkyl substituiert sind; und
   - a: für 0, 1 oder 2 steht;
und
Monomer Mb ausgewählt ist unter
- monoethylenisch ungesättigten C₃-C₂₃-Monocarbonsäuren;
- Estern monoethylenisch ungesättigter C₃-C₂₃-Monocarbonsäuren mit Verbindungen der Formel (II)

   R⁴-OH (II),

   worin
   - R⁴: für C₁-C₁₀-Alkyl, C₃-C₁₂-Cycloalkyl oder Phenyl steht, wobei C₃-C₁₂-Cycloalkyl und Phenyl unsubstituiert sind oder ein- oder mehrfach durch C₁-C₁₀-Alkyl substituiert sind;
- N-C₁-C₈-Alkyl-substituierte Amiden von monoethylenisch ungesättigten C₃-C₂₃-Monocarbonsäuren;
- monoethylenisch ungesättigten C₄-C₂₀-Dicarbonsäuren;
- monoethylisch ungesättigten C₄-C₂₀-Dicarbonsäureanhydriden;
- Monoestern monoethylenisch ungesättigter C₄-C₂₀-Dicarbonsäuren mit Verbindungen der Formel (II);
- Diestern monoethylenisch ungesättigter C₄-C₂₀-Dicarbonsäuren mit Verbindungen der Formel (II);
- Vinylestern von C₁-C₁₀-Monocarbonsäuren;
- Allylestern von C₁-C₁₀-Monocarbonsäuren;
- monoethylenisch ungesättigten Oxiranen der Formel (III); und
- monoethylenisch ungesättigten Oxiranen der Formel (IV) 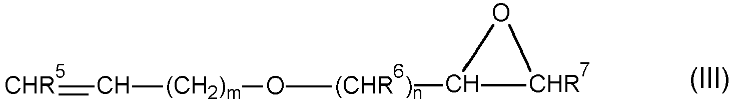 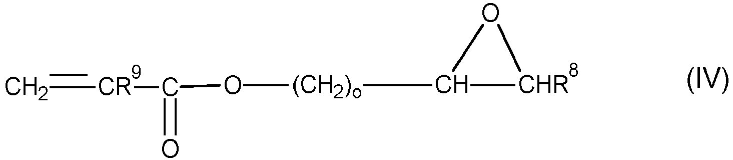 worin
   - R⁵, R⁶, R⁷, R⁸ und R⁹: unabhängig voneinander ausgewählt sind unter Wasserstoff und C₁-C₆-Alkyl;
   - m: für eine ganze Zahl von 0 bis 20 steht;
   - n: für eine ganze Zahl von 0 bis 10 steht; und
   - o: für eine ganze Zahl von 0 bis 5 steht.

Ein weiterer Gegenstand ist die Verwendung in Folien, Monofilamenten, Fasern, Garnen oder textilen Flächengebilden.

Ein weiterer Gegenstand ist die Verwendung in Elektro- und Elektronikbauteilen und für Automobil-Anwendungen im Hochtemperaturbereich.

Ein weiterer Gegenstand ist die Verwendung für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Ein weiterer Gegenstand ist ein Verfahren zur Verminderung von Farbveränderungen in Polymerzusammensetzungen, wobei man
(i) eine Polymerzusammensetzung, enthaltend wenigstens ein thermoplastisches Polyamid B), bereitstellt; und
(ii) ein Polyolefincopolymer A) wie zuvor definiert in die Polymerzusammensetzung einarbeitet.

Ein weiterer Gegenstand ist ein Verfahren zur Verwendung von Polyolefincopolymeren A) wie zuvor definiert in einer Polymerzusammensetzung, die wenigstens ein thermoplastisches Polyamid B) enthält, zur Verminderung von Farbveränderungen beim Erhitzen der Polymerzusammensetzung.

### BESCHREIBUNG DER ERFINDUNG

Durch die erfindungsgemäße Verwendung der Polyolefinkomponente A) lässt sich eine herstellungs- und/oder verarbeitungsbedingte Verfärbung an Polyamid-haltigen Polymerzusammensetzungen vermeiden oder zumindest reduzieren. Die erhaltenen Polymerzusammensetzungen weisen somit wenigstens einen der folgenden Vorteile auf:
- die Polyamid-haltigen Polymerzusammensetzungen weisen einen verbesserten Gelbindex YI (gemäß ASTM D 1925) auf;
- die Polyamid-haltigen Polymerzusammensetzungen weisen im CIELAB-Farbraum einen verbesserten L* Wert (hoher Weißgrad) auf;
jeweils im Vergleich zu einer Polyamid-haltigen Polymerzusammensetzung, die keine Polyolefinkomponente A) enthält. Zudem weisen die Polymerzusammensetzungen verbesserte mechanische Eigenschaften, z. B. hohe Zähigkeit auf. Durch Verwendung der Polyolefinkomponente A) in einer Polyamid-haltigen Polymerzusammensetzungen kann daher in der Regel auf die Mitverwendung eines Schlagzähmodifier verzichtet werden.

Im Rahmen der vorliegenden Erfindung umfasst der Ausdruck C₁-C₁₀-Alkyl lineare und verzweigte Alkylgruppen mit 1 bis 4, bis 6, bis 8 oder bis 10 Kohlenstoffatomen, z.B. Methyl, Ethyl, Propyl, 1-Methylethyl, Butyl, 1-Methyl-propyl, 2-Methylpropyl, 1,1-Dimethylethyl, Pentyl, 1-Methylbutyl, 2-Methylbutyl, 3-Methylbutyl, 2,2-Di-methylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, 2-Heptyl, 3-Heptyl, 2-Ethylpentyl, 1-Propylbutyl, n-Octyl, 2 -Ethylhexyl etc.

Im Rahmen der vorliegenden Erfindung umfasst der Ausdruck C₂-C₂₂-Alkenyl einfach ungesättigte, lineare oder verzweigte Kohlenwasserstoffreste mit 2 bis 22 Kohlenstoffatomen und einer Doppelbindung in einer beliebigen Position, z.B. C₃-C₆-Alkenyl wie 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl, 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-lpropenyl, 1-Ethyl-2-propenyl, 1-Hexenyl, 2-Hexenyl, 3-Hexenyl, 4-Hexenyl, 5-Hexenyl, etc.

Im Rahmen der vorliegenden Erfindung umfasst der Ausdruck C₃-C₁₂-Cycloalkyl monocyclische, bicyclische und tricyclische gesättigte Kohlenwasserstoffgruppen mit 3 bis 12 Kohlenstoffringgliedern. Beispiele für monocyclische gesättigte Kohlenwasserstoffgruppen mit 3 bis 8, vorzugsweise 3 bis 6 Kohlenstoffringgliedern, sind Cyclopropyl, Cyclobutyl, Cyclopentyl, Cyclohexyl, Cycloheptyl und Cyclooctyl. Beispiele für bicyclische gesättigte Kohlenwasserstoffgruppen mit 5 bis 10 Kohlenstoffringgliedern sind Bicyclo[2.2.1]hept-1-yl, Bicyclo[2.2.1]hept-2-yl, Bicyclo[2.2.1]hept-7-yl, Bicyclo[2.2.2]oct-1-yl, Bicyclo[2.2.2]oct-2-yl, Bicyclo[3.3.0]octyl und Bicyclo[4.4.0]decyl. Adamantyl ist ein Beispiel für einen tricyclischen, gesättigten Kohlenwasserstoff.

Im Rahmen der vorliegenden Erfindung umfasst der Ausdruck C₅-C₁₂-Cycloalkenyl monocyclische, bicyclische und tricyclische einfach ungesättigte Kohlenwasserstoffgruppen mit 5 bis 12 Kohlenstoffringgliedern. Beispiele für monocyclische, einfach ungesättigte Kohlenwasserstoffgruppen mit 5 bis 12, vorzugsweise 5 bis 8 Kohlenstoffringgliedern, sind Cyclopentenyl, Cyclohexenyl, Cycloheptenyl und Cyclooctenyl. Beispiele für bicyclische, einfach ungesättigte Kohlenwasserstoffgruppen mit 5 bis 12 Kohlenstoffringgliedern sind Bicyclo[2.2.1]hept-2-enyl, Bicyclo[2.2.2]oct-2-enyl, Bicyclo[3.3.0]oct-2-enyl und Bicyclo[4.4.0]dec-2-enyl.

Im Rahmen der vorliegenden Erfindung umfasst der Ausdruck "Dicarbonsäure" Verbindungen, die über zwei Carboxy-Gruppen (-COOH) verfügen. Carbonsäuren mit nur einer Carboxygruppe werden als Monocarbonsäure bezeichnet.

Im Rahmen der vorliegenden Erfindung umfasst der Begriff "Copolymer" Polymere, die aus zwei oder mehr, beispielsweise 3 oder 4, verschiedenen Monomeren aufgebaut sind.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PAZ1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin)

Der Ausdruck "amorphes Polyamid" umfasst (Co)polyamide, die keine Phasenänderung zeigen und nur eine Glasübergangstemperatur (Tg) aufweisen.

Der Ausdruck "teilkristallines Polyamid" umfasst (Co)polyamide, die gleichzeitig eine Glasübergangstemperatur (Tg) und eine Schmelztemperatur (Tm) aufweisen.

Glasübergangstemperaturen (Tg) und Schmelztemperaturen (Tm) können mittels Differential Scanning Calorimetry (DSC) bestimmt werden. Die Bestimmung kann in an sich bekannter Weise erfolgen (DIN EN ISO 11357, Teile 1 bis 3).

Im Folgenden werden Verbindungen, die sich von Acrylsäure und Methacrylsäure ableiten können, teilweise verkürzt durch Einfügen der Silbe "(Meth)" in die von der Acrylsäure abgeleitete Verbindung bezeichnet.

Die Bewertung der Farbeigenschaften der Polymerzusammensetzung erfolgt nach dem a,b-Farbkoordinatensystem, das auch als L*,a*,b*-System nach CIELAB bezeichnet wird. Wird eine Farbe in CIEL*a*b* definiert, so beschreibt L* die Helligkeit, a* den Rot-/Grünwert und b* den Gelb-/Blauwert. Die Helligkeit einer Farbe ist die Tendenz der Farbe zu Weiß oder Schwarz. Eine helle Farbe hat einen hohen Helligkeitsgrad, eine dunkle Farbe einen geringen Helligkeitsgrad. Die Helligkeit ändert sich in vertikaler Richtung von 0 (Schwarz) bis 100 (Weiß). Am Umfang der Farbscheibe liegen die reinen Farbtöne mit hoher Sättigung. Nach innen nimmt die Sättigung bis zur Achse ab, dort ist sie Null (unbunt, grau). Komplementärfarben liegen einander gegenüber. Im CIEL*a*b*-Modell liegen alle Farbtöne gleicher Helligkeit auf einer kreisförmigen, flachen Ebene, auf der sich senkrecht zueinander die a- und b-Achsen befinden. Positive a-Werte sind rötlich, negative a-Werte grünlich, positive b-Werte gelblich und negative b-Werte bläulich.

### Polyolefincopolymer A)

Das erfindungsgemäß verwendete Polyolefincopolymer A) enthält ein oder mehrere monoethylenisch ungesättigte Monomere Ma einpolymerisiert.

Geeignete Monomere Ma sind lineare und verzweigte C₂-C₁₀-Alkene. Bevorzugt sind Alkene mit 2 bis 8 Kohlenstoffatomen und einer Doppelbindung in einer beliebigen Position wie Ethen, Propen, Buten, Penten, Hexen und Octen. Insbesondere bevorzugt sind Alkene mit 2 bis 8 Kohlenstoffatomen und einer endständigen Doppelbindung. Hierunter bevorzugt sind Ethen, Propen, 1-Buten, 1-Penten, 3-Methyl-1-penten, 1-Hexen, 1-Octen und Mischungen davon. Insbesondere bevorzugt sind Ethen, Propen, 1-Buten und Mischungen davon. Ebenfalls bevorzugt sind Monomere Ma, die wenigstens unter Monomeren Ma1 und Monomeren Ma2 und Mischungen davon ausgewählt sind. Monomer Ma1 ist ein C₂-C₄-Alken wie Ethan, Propen und 1-Buten. Monomer Ma2 ist ein C₅-C₁₀-Alken, vorzugsweise 1-Octen.

Geeignete Monomere Ma sind weiterhin vinylaromatische Verbindungen der Formel (I) 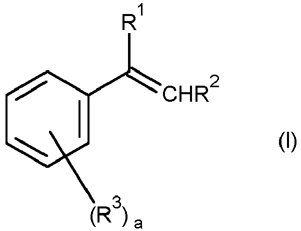 worin
- R¹ und R²: unabhängig voneinander ausgewählt sind unter Wasserstoff, C₁-C₁₀-Alkyl, C₃-C₁₂-Cycloalkyl und Phenyl, wobei C₃-C₁₂-Cycloalkyl und Phenyl unsubstituiert sind oder ein- oder mehrfach durch C₁-C₁₀-Alkyl substituiert sind;
- R³: für C₁-C₁₀-Alkyl, C₃-C₁₂-Cycloalkyl und Phenyl steht, wobei C₃-C₁₂-Cycloalkyl und Phenyl unsubstituiert sind oder ein- oder mehrfach durch C₁-C₁₀-Alkyl substituiert sind; und
- a: für 0, 1 oder 2 steht.

Bevorzugte Verbindungen (I) sind solche, worin R¹ und R² unabhängig voneinander ausgewählt sind unter Wasserstoff und C₁-C₄-Alkyl. R³, soweit vorhanden, steht vorzugsweise für C₁-C₄-Alkyl. a steht vorzugsweise für 0 oder 1. In den vinylaromatischen Verbindungen der Formel (I) steht R¹ insbesondere für Wasserstoff oder Methyl. R² steht insbesondere für Wasserstoff. a ist insbesondere 0.

Ganz besonders bevorzugte Monomere Ma sind Ethen, Propen, 1-Buten und Mischungen davon.

Vorzugsweise hat das Polyolefincopolymer A) einen Gehalt an Monomer Ma von 50 und 99 Gew.-%, bevorzugt 55 bis 95 Gew.-%.

Das Polyolefincopolymer A) enthält ein- oder mehrere monoethylenisch ungesättigte Monomere Mb einpolymerisiert.

Geeignete Monomere Mb sind monoethylenisch ungesättigte C₃-C₂₃-Monocarbonsäuren. Geeignete monoethylenisch ungesättigte C₃-C₂₃-Monocarbonsäuren sind Monocarbonsäuren mit linearem oder verzweigtem Alkenylrest mit 2 bis 22 Kohlenstoffatomen.

Unter den monoethylenisch ungesättigten C₃-C₂₃-Monocarbonsäuren mit linearem oder verzweigtem Alkenylrest mit 2 bis 22 Kohlenstoffatomen sind monoethylenisch ungesättigte C₃-C₂₃-Monocarbonsäuren der Formel (V) bevorzugt 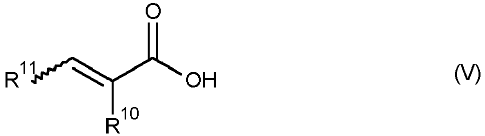 worin
- R¹⁰: ausgewählt ist unter Wasserstoff und C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, n-Decyl;
- R¹¹: ausgewählt unter Wasserstoff und
C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, n-Decyl.

In einer bevorzugten Ausführungsform bedeutet R¹⁰ Wasserstoff oder C₁-C₄-Alkyl wie Methyl, Ethyl, n-Propyl, iso-Propyl, n-Butyl, iso-Butyl, sec.-Butyl und tert.-Butyl, insbesondere Methyl oder Ethyl, ganz besonders Wasserstoff oder Methyl.

In einer anderen bevorzugten Ausführungsform bedeutet R¹¹ Wasserstoff oder C₁-C₄-Alkyl wie Methyl, Ethyl, n-Propyl, iso-Propyl, n-Butyl, iso-Butyl, sec.-Butyl und tert.-Butyl, insbesondere Wasserstoff oder Methyl und ganz besonders Wasserstoff.

Hierunter besonders bevorzugt werden monoethylenisch ungesättigte C₃-C₆-Monocarbonsäuren. Beispiele hierfür sind Acrylsäure, Methacrylsäure, Ethacrylsäure, Crotonsäure und Isocrotonsäure. Ganz besonders bevorzugte monoethylenisch ungesättigte C₃-C₆-Monocarbonsäuren sind Acrylsäure und Methacrylsäure.

Geeignet sind weiterhin monoethylenisch ungesättigte Monocarbonsäuren mit cycloaliphatischem Rest, wobei die Carboxygruppe an ein Kohlenstoff-Ringatom des cycloaliphatischen Restes gebunden ist. Als cycloaliphatische Reste kommen monocyclische und bicyclische Reste in Betracht. Der cycloaliphatische Rest enthält insgesamt 5 bis 22 Kohlenstoffatome. Der cycloaliphatische Rest kann durch weitere aliphatische Gruppen, insbesondere Alkylgruppen, besonders bevorzugt 1, 2 oder 3 C₁-C₄-Alkylgruppen substituiert sein. Insbesondere steht der cycloaliphatische Rest für C₅-C₁₂-Cycloalkenyl, das unsubstituiert ist oder 1, 2 oder 3 C₁-C₄-Alkylgruppen trägt.

Geeignet als Monomer Mb sind weiterhin die Ester monoethylenisch ungesättigter C₃-C₂₃-Monocarbonsäuren mit Verbindungen der Formel (II)

R⁴-OH (II),

worin
- R⁴: für C₁-C₁₀-Alkyl, C₃-C₁₂-Cycloalkyl oder Phenyl steht, wobei C₃-C₁₂-Cycloalkyl und Phenyl unsubstituiert sind oder ein- oder mehrfach durch C₁-C₁₀-Alkyl substituiert sind.

Die den Estern zugrunde liegende monoethylenisch ungesättigte C₃-C₂₃-Monocarbonsäure ist vorzugsweise eine monoethylenisch ungesättigte Monocarbonsäure mit linearem oder verzweigtem Alkenylrest mit 2 bis 22 Kohlenstoffatomen oder eine monoethylenisch ungesättigte Monocarbonsäure mit cycloaliphatischer Gruppe mit 5 bis 22 Kohlenstoffatomen, wie zuvor beschrieben.

Bevorzugt sind Ester der zuvor genannten monoethylenisch ungesättigten C₃-C₂₃-Monocarbonsäuren der Formel (V) mit Verbindungen der Formel (II). Diese Ester werden im Folgenden als Carbonsäureester der allgemeinen Formel (VI) bezeichnet, 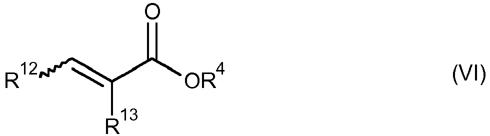 worin
- R⁴: ausgewählt ist unter
C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, 2-n-Propyl-heptyl, n-Decyl; insbesondere Methyl, Ethyl, n-Butyl, 2-Ethylhexyl oder 2-n-Propyl-heptyl; und C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- R¹²: ausgewählt ist unter Wasserstoff und
C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, 2-(n-Propyl)-heptyl, n-Decyl; besonders bevorzugt C₁-C₄-Alkyl wie Methyl, Ethyl, n-Propyl, iso-Propyl, n-Butyl, iso-Butyl, sec-Butyl und tert-Butyl; insbesondere Methyl.
- R¹³: ausgewählt ist unter Wasserstoff und
C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, iso-Octyl, 2-Ethylhexyl, n-Nonyl, n-Decyl, 2-n-Propyl-heptyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl und n-Butyl.

In einer bevorzugten Ausführungsform der Erfindung steht R⁴ für Methyl, Ethyl, n-Butyl, 2-n-Propylheptyl oder 2-Ethylhexyl.

In einer weiteren bevorzugten Ausführungsform der Erfindung bedeutet R¹² Wasserstoff.

In einer bevorzugten Ausführungsform der Erfindung bedeutet R¹³ Wasserstoff oder Methyl. Ganz besonders bevorzugt bedeutet R¹³ Wasserstoff.

In einer weiteren bevorzugten Ausführungsform der Erfindung bedeuten R¹² und R¹³ Wasserstoff.

Besonders bevorzugt werden Ester einer monoethylenisch ungesättigten linearen oder verzweigten aliphatischen C₃-C₆-Monocarbonsäure mit C₁-C₁₀-Alkanolen. Beispiele hierfür sind (Meth)acrylsäuremethylester, (Meth)acrylsäureethylester, (Meth)acrylsäure-n-butylester, (Meth)acrylsäure-2-ethylhexylester und (Meth)acrylsäure-2-(n-propyl)-heptylester.

Geeignete Monomere Mb sind weiterhin N-C₁-C₈-Alkyl-substituierte Amide von monoethylenisch ungesättigten C₃-C₂₃-Monocarbonsäuren, insbesondere N-C₁-C₈-Alkyl substituierte Amide von monoethylenisch ungesättigten linearen oder verzweigten C₃-C₂₃-Monocarbonsäuren der Formel (V).

Geeignete Monomere Mb sind weiterhin monoethylenisch ungesättigten C₄-C₂₀-Dicarbonsäuren. Als monoethylenisch ungesättigte C₄-C₂₀-Dicarbonsäuren kommen Dicarbonsäuren mit linearem oder verzweigtem Alkenylrest mit 2 bis 18 Kohlenstoffatomen in Betracht. Hierunter bevorzugt sind monoethylenisch ungesättigte C₄-C₂₀-Dicarbonsäuren der Formel (VII), 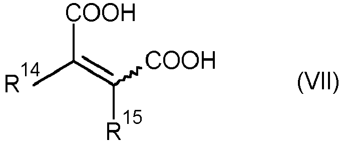 worin
R¹⁴ und R¹⁵ unabhängig voneinander ausgewählt sind unter Wasserstoff und C₁-C₈-Alkyl, vorzugsweise ausgewählt unter Wasserstoff und C₁-C₆-Alkyl.

In einer bevorzugten Ausführungsform der Erfindung sind in den Verbindungen der Formel (VII) die beiden Carboxygruppen so angeordnet, dass sie ein intramolekulares Anhydrid bilden können.

Bevorzugte Verbindungen der Formel (VII) sind Maleinsäure und Fumarsäure, insbesondere Maleinsäure.

Beispiele für monoethylenisch ungesättigte C₄-C₂₀-Dicarbonsäuren sind weiterhin monoethylenisch ungesättigte Dicarbonsäuren mit cycloaliphatischem Rest, wobei beide Carboxygruppen an Ringkohlenstoffatomen des cycloaliphatischen Rests gebunden sind. Beide Carboxygruppen sind bevorzugt so angeordnet, dass sie ein intramolekulares Anhydrid bilden können. Der cycloaliphatische Rest weist insgesamt 5 bis 22 Kohlenstoffatome auf. Der cycloaliphatische Rest ist vorzugsweise ein monocyclischer oder bicyclische Rest. Der cycloaliphatische Rest kann durch weitere aliphatische Gruppen, insbesondere Alkylgruppen, besonders bevorzugt 1, 2 oder 3 C₁-C₄-Alkylgruppen substituiert sein. Insbesondere steht der cycloaliphatische Rest für C₅-C₁₂-Cycloalkenyl, das unsubstituiert ist oder 1, 2 oder 3 C₁-C₄-Alkylgruppen trägt. Der cycloaliphatische Rest steht besonders bevorzugt für eine Bicyclo[2.2.1]hept-2-en-yl Gruppe oder eine 2-Methylbicyclo[2.2.1]hept-2-en-yl Gruppe. Beispiele für cycloaliphatische, monoethylenisch ungesättigte Dicarbonsäuren sind Bicyclo[2.2.1]hept-5-en-2,3-dicarbonsäure und 5-Methyl-bicyclo[2.2.1]hept-5-en-2,3-dicarbonsäure.

Geeignete Monomere Mb sind weiterhin monoethylenisch ungesättigte C₄-C₂₀-Dicarbonsäureanhydride. Als Dicarbonsäureanhydride kommen beispielsweise die Anhydride der zuvor genannten monoethylenisch ungesättigten C₄-C₂₀-Dicarbonsäuren in Betracht, in denen die Carboxygruppen so angeordnet sind, dass sie ein intramolekulares Anhydrid bilden können.

Geeignete monoethylenisch ungesättigte C₄-C₂₀-Dicarbonsäureanhydride sind vorzugsweise solche der Formel (VIII) 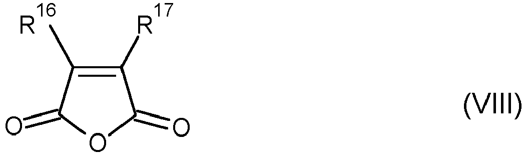 worin
R¹⁶ und R¹⁷ unabhängig voneinander ausgewählt sind unter Wasserstoff oder C₁-C₈-Alkyl.

Eine ganz bevorzugte Verbindung der Formel (VIII) ist Maleinsäureanhydrid.

Geeignete monoethylenisch ungesättigte C₄-C₂₀-Dicarbonsäureanhydride sind weiterhin monoethylenisch ungesättigte Dicarbonsäureanhydride mit cycloaliphatischem Rest. Der cycloaliphatische Rest ist in der Regel ein monocyclischer oder bicyclischer Rest und weist insgesamt 5 bis 18 Kohlenstoffatome auf. Der cycloaliphatische Rest kann durch weitere aliphatische Gruppen, insbesondere Alkylgruppen, besonders bevorzugt 1, 2 oder 3 C₁-C₄-Alkylgruppen, substituiert sein. Beispiele für monoethylenisch ungesättigte Dicarbonsäureanhydride mit cycloaliphatischer Grupppe sind Bicyclo[2.2.1]hept-5-en-2,3-dicarbonsäureanhydrid und 5-Methyl-bicyclo[2.2.1]hept-5-en-2,3-dicarbonsäureanhydrid.

Geeignete Monomere Mb sind weiterhin die Halbester von monoethylenisch ungesättigten C₄-C₂₀-Dicarbonsäuren mit Verbindungen der Formel (II). Die Halbester von monoethylenisch ungesättigten C₄-C₂₀-Dicarbonsäuren mit Verbindungen der Formel (II) sind vorzugsweise linear oder verzweigt aliphatisch oder cycloaliphatisch aufgebaut. Insbesondere bevorzugt sind die C₁-C₁₀-Alkylester von monoethylenisch ungesättigten, linear oder verzweigt aliphatischen C₄-C₁₀-Dicarbonsäuren, z.B. von Maleinsäure wie Maleinsäuremonomethylester.

Geeignete Monomere Mb sind weiterhin die Diester monoethylenisch ungesättigter linear oder verzweigt aliphatischen C₄-C₂₀-Dicarbonsäuren mit Verbindungen der Formel (II). Die den Diestern zugrunde liegende Dicarbonsäure ist vorzugsweise linear oder verzweigt aliphatisch, oder cycloaliphatisch aufgebaut. Bezüglich geeigneter Dicarbonsäuren wird auf das zuvor Gesagte Bezug genommen. Bevorzugt werden die Diester von monoethylenisch ungesättigten C₄-C₂₀-Dicarbonsäuren mit Verbindungen der Formel (II). Insbesondere bevorzugt sind die C₁-C₁₀-Dialkylester von monoethylenisch ungesättigten, linear oder verzweigt aliphatischen C₄-C₁₀-Dicarbonsäuren, z. B. von Maleinsäure wie Maleinsäuredimethylester.

Geeignete Monomere Mb sind weiterhin Vinylester von linear oder verzweigt aliphatischen C₁-C₁₀-Monocarbonsäuren. Bevorzugte Vinylester sind Vinylacetat, Vinylpropionat, Vinylbutyrat und Vinyl-2-ethylhexanoat.

Geeignete Momomere Mb sind weiterhin Allylester von linear oder verzweigt aliphatischen C₁-C₁₀-Monocarbonsäuren. Beispiele für geeignete Allylester sind Allylacetat, Allylpropionat, Allyl-n-butyrat und Allylhexanoat.

Geeignete Monomere Mb sind weiterhin monoethylenisch ungesättigte Oxirane der Formel (III) 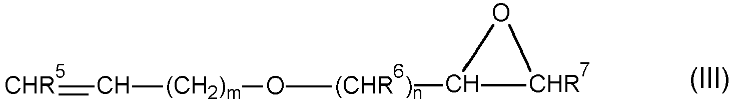 worin
- R⁵, R⁶, R⁷,: unabhängig voneinander, ausgewählt sind unter Wasserstoff und C₁-C₆-Alkyl;
- m: für eine ganze Zahl von 0 bis 20 steht; und
- n: für eine ganze Zahl von 0 bis 10 steht.

Geeignete Monomere Mb sind weiterhin monoethylenisch ungesättigte Oxirane der Formel (IV) 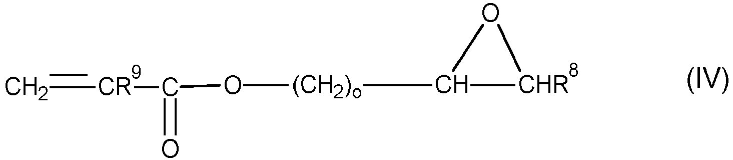 worin
- R⁸ und R⁹: unabhängig voneinander ausgewählt sind unter Wasserstoff und C₁-C₆-Alkyl; und
- o: für eine ganze Zahl von 0 bis 5 steht.

Bevorzugte Verbindungen der Formel (IV) sind Epoxygruppen-enthaltende Ester der Acrylsäure und/oder Methacrylsäure, wie Glycidylacrylat und Glycidylmethacrylat.

Bevorzugte Monomere Mb sind insbesondere monoethylenisch ungesättigte C₃-C₆-Monocarbonsäuren, Ester monoethylenisch ungesättigter C₃-C₆-Monocarbonsäuren mit C₁-C₁₀-Alkanolen, monoethylisch ungesättigte C₄-C₁₀-Dicarbonsäureanhydride, Verbindungen der Formel (IV) und Mischungen davon.

Besonders bevorzugt ist das Monomer Mb ausgewählt unter Acrylsäure, Methacrylsäure, Acrylsäure-C₁-C-₁₀-alkylestern, Methacrylsäure-Ci-Cio-alkylestern, Maleinsäureanhydrid, Bicyclo[2.2.1]hept-5-en-2,3-dicarbonsäureanhydrid, das unsubstituiert ist oder 1, 2 oder 3 C₁-C₄-Alkylgruppen trägt, und Mischungen davon. Speziell ist das Monomer Mb ausgewählt unter Acrylsäure, Methacrylsäure, Acrylsäureethylester, Acrylsäure-n-butylester, Acrylsäure-isobutylester, Acrylsäure-tert-butylester, Maleinsäure, Maleinsäureanhydrid und Bicyclo[2.2.1]hept-5-en-2,3-dicarbonsäureanhydrid, das unsubstituiert ist oder 1, 2 oder 3 C₁-C₄-Alkylgruppen trägt, und Mischungen davon.

Das Polyolefincopolymer A) hat vorzugsweise einen Gehalt an Monomer Mb von 1 bis 50 Gew.-%, bevorzugt 5 bis 45 Gew.-%.

In einer weiteren Ausführungsform enthalten die erfindungsgemäß eingesetzten Polyolefincopolymere A) zusätzlich zu den zuvor genannten Monomeren Ma und Mb wenigstens ein weiteres, damit copolymerisierbares Dien als Monomer Mc einpolymerisiert. Vorzugsweise ist das Monomer Mc ein Dien mit 4 bis 25 Kohlenstoffatomen. Geeignete Monomere Mc sind konjugierte Diene wie Isopren und Butadien und nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo[5.2.1.0.2.6]-3,8-decadien und deren Mischungen.

Bevorzugte Monomere Mc sind ausgewählt unter Isopren, Butadien, Hexa-1,5-dien, 5-Ethylidennorbornen und Dicyclopentadien und Mischungen davon. In einer Ausführungsform der Erfindung werden keine Monomere Mc einpolymerisiert.

Der Gehalt an Monomer Mc in dem Polyolefincopolymer A) beträgt 0 bis 15 Gew.-%.

In einer weiteren Ausführungsform enthalten die erfindungsgemäß eingesetzten Polyolefincopolymere A) zusätzlich zu den zuvor genannten Monomeren Ma und Mb und dem optionalen Monomer Mc wenigstens ein von den Monomeren Ma, Mb, und sofern vorhanden Monomer Mc, verschiedenes, damit copolymerisierbares Monomer Md einpolymerisiert. Geeignete Monomere Md sind beispielsweise ungesättigte Nitrile wie Acrylnitril oder Methacrylnitril. In einer Ausführungsform der Erfindung werden keine Monomere Md einpolymerisiert.

Vorteilhaft bestehen die Polyolefincopolymere A) aus 50 bis 98% Ethen, 0,1 bis 20 Gew.-% Epoxygruppen enthaltenden Monomeren und/oder (Meth)acrylsäure und/oder Säureanhydridgruppen enthaltenden Monomeren sowie die restliche Menge an (Meth)acrylsäurelsäureestern.

Besonders bevorzugt sind Polyolefincopolymere A) aus
(a) 50 bis 98, insbesondere 55 bis 95 Gew.-% Ethen,
(b1) 0,1 bis 40, insbesondere 0,3 bis 20 Gew.-% Glycidylacrylat und/oder Glycidylmethacrylat, (Meth)acrylsäure und/oder Maleinsäureanhydrid und
(b2) 1 bis 45, insbesondere 5 bis 40 Gew.-% n-Butylacrylat und/oder 2-Ethylhexylacrylat.

Besonders bevorzugt sind ebenfalls Polyolefincopolmere A) aus
(a) 50 bis 80 Gew.-%, bevorzugt bis 75 Gew.-% Ethen,
(b1) 2 bis 10 Gew.-% (Meth)acrylsäure
(b2) 0,1 bis 2 Gew.-% Maleinsäure oder Maleinsäureanhydrid,
(b3) 15 bis 40 Gew.-% n-Butyl(meth)acrylat.

Die erfindungsgemäß eingesetzten Polyolefincopolymerisate A) werden nach an sich bekannten Verfahren, wie beispielsweise in der WO2005/121249, WO2007/135038, WO20011/051123 oder US 5,436,294 beschrieben, hergestellt.

Geeignete Polyolefincopolymere A) sind mit Anhydridgruppen funktionalisierte Styrol-Ethenbuten-Blockcopolymere wie Kraton® G 1901 FX, der Firma Kraton.

Geeignete Polyolefincopolymere A) sind des Weiteren Styrol-Acrylnitril-Maleinsäureanhydrid-Polymere.

Besonders geeignete Polyolefincopolymere A) sind Copolymere des Ethylens mit Ethyl- oder Butylacryat und Acrylsäure und/oder Maleinsäureanhydrid.

Bevorzugt eingesetzte Handelsprodukte sind Lupolen® KR 1270 von BASF SE oder die Fusabond® Produktreihe von DuPont, beispielsweise Fusabond® A EB 560D oder Fusabond® N MN 598.

Vorteilhafterweise sind die Polyolefincopolymere A) Schlagzähmodifier, die die Zähigkeit der Polymerzusammensetzung erhöhen.

Der Gehalt an Polyolefincopolymer A) in der Polymerzusammensetzung beträgt in der Regel 0,1 bis 30 Gew.-% bezogen auf das Gesamtgewicht der Polymerzusammensetzung. Beispielsweise beträgt der Gehalt an Polyolefincopolymer A) in der Polymerzusammensetzung 1 bis 25 Gew.-%, oder 2 bis 20 Gew.-% oder 2 bis 15 Gew.-%, bezogen auf das Gesamtgewicht der Polymerzusammensetzung.

### Komponente B

Als Komponente B) enthalten die Polymerzusammensetzungen wenigstens ein thermoplastisches Polyamid B).

Die erfindungsgemäß einzusetzenden Polyamide können nach verschiedenen Verfahren hergestellt werden und aus sehr unterschiedlichen Bausteinen synthetisiert werden. Geeignet sind auch Blends mit Anteilen von anderen Polymeren, z. B. von Polyethylen, Polypropylen oder ABS (Acrylnitril-Butadien-Styrol-Copolymer).

Die Edukte zur Herstellung der erfindungsgemäß verwendeten Polyamide B) sind vorzugsweise ausgewählt unter
(a) unsubstituierten oder substituierten aromatischen Dicarbonsäuren und Derivaten von unsubstituierten oder substituierten aromatischen Dicarbonsäuren,
(b) unsubstituierten oder substituierten aromatischen Diaminen,
(c) aliphatischen oder cycloaliphatischen Dicarbonsäuren,
(d) aliphatischen oder cycloaliphatischen Diaminen,
(e) Monocarbonsäuren,
(f) Monoaminen,
(g) mindestens dreiwertigen Aminen,
(h) Lactamen,
(l) ω-Aminosäuren,
(k) von (a) bis (I) verschiedenen, damit cokondensierbaren Verbindungen.

Geeignete Polyamide B) sind aliphatische Polyamide. Für aliphatische Polyamide vom Typ PA Z1Z2 (wie PA 66) gilt die Maßgabe, dass mindestens eine der Komponenten (c) oder (d) vorhanden sein muss und keine der Komponenten a) und b) vorhanden sein darf. Für aliphatische Polyamide vom Typ PA Z (wie PA 6 oder PA 12) gilt die Maßgabe, dass mindestens die Komponente h) vorhanden sein muss.

Geeignete Polyamide B) sind weiterhin teilaromatische Polyamide. Für teilaromatische Polyamide gilt die Maßgabe, dass mindestens eine der Komponenten a) oder b) und mindestens eine der Komponenten (c) oder (d) vorhanden sein muss.

Die aromatischen Dicarbonsäuren (a) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren (a) weisen vorzugsweise wenigstens einen (z. B. 1, 2, 3 oder 4) C₁-C₄-Alkylrest auf. Insbesondere weisen substituierte aromatischen Dicarbonsäuren (a) 1 oder 2 C₁-C₄-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, insbesondere Methyl und Ethyl und speziell Methyl. Substituierte aromatische Dicarbonsäuren (a) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure (a) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Natriumisophthalsäure.

Besonders bevorzugt ist die aromatische Dicarbonsäure (a) Terephthalsäure, Isophthalsäure oder ein Gemisch aus Terephthalsäure und Isophthalsäure.

Die aromatischen Diamine (b) sind bevorzugt ausgewählt unter Bis-(4-amino-phenyl)-methan, 3-Methylbenzidin, 2,2- Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyldiamin, Bis-(4-methyl-aminophenyl)-methan, 2,2-Bis-(4-methylaminophenyl)-propan oder Gemische davon.

Die aliphatischen oder cycloaliphatischen Dicarbonsäuren (c) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-a,co-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine (d) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, 2-Methyl-1,8-octamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'-diaminodicyclohexylmethan, Isophorondiamin (IPDA) und Mischungen davon.

Besonders bevorzugt ist das Diamin (d) ausgewählt unter Hexamethylendiamin, 2-Methylpentamethylendiamin, Octamethylendiamin, Nonamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan, Isophorondiamin (IPDA) und Mischungen davon.

In einer speziellen Ausführung enthalten die teilaromatischen Polyamide B) wenigstens ein Diamin (d) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide B) als Diamin (d) ausschließlich Hexamethylendiamin einpolymerisiert.

In einer weiteren speziellen Ausführung enthalten die teilaromatischen Polyamide B) als Diamin D) ausschließlich Bis-(4-aminocyclohexyl)-methan einpolymerisiert.

In einer weiteren speziellen Ausführung enthalten die teilaromatischen Polyamide B) als Diamin (d) ausschließlich 3,3'-Dimethyl-4,4'diaminodicyclohexylmethan (MACM) einpolymerisiert.

In einer weiteren speziellen Ausführung enthalten die teilaromatischen Polyamide B) als Diamin (d) ausschließlich Isophorondiamin (IPDA) einpolymerisiert.

Die aliphatischen und die teilaromatischen Polyamide können wenigstens eine Monocarbonsäure (e) einpolymerisiert enthalten. Die Monocarbonsäuren (e) dienen dabei der Endverkappung der erfindungsgemäß eingesetzten Polyamide B). Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren (e) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, Versatic®-Säuren, Koch®-Säuren und Mischungen davon.

Werden als Monocarbonsäuren (e) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure (e) ausgewählt unter Essigsäure, Propionsäure, Benzoesäure und Mischungen davon.

In einer speziellen Ausführung enthalten die aliphatischen und die teilaromatischen Polyamide B) als Monocarbonsäure e) ausschließlich Propionsäure einpolymerisiert.

In einer weiteren speziellen Ausführung enthalten die aliphatischen und die teilaromatischen Polyamide als Monocarbonsäure (e) ausschließlich Benzoesäure einpolymerisiert.

In einer weiteren speziellen Ausführung enthalten die aliphatischen und die teilaromatischen Polyamide B) als Monocarbonsäure (e) ausschließlich Essigsäure einpolymerisiert.

Die aliphatischen und die teilaromatischen Polyamide B) können wenigstens ein Monoamin (f) einpolymerisiert enthalten. Dabei enthalten die aliphatischen Polyamide B) nur aliphatische Monoamine oder alicyclische Monoamine einpolymerisiert. Die Monoamine (f) dienen dabei der Endverkappung der erfindungsgemäß eingesetzten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine (f) sind aliphatische Monoamine, alicyclische Monoamine und aromatische Monoamine. Dazu zählen Methylamin, Ethylamin, Propylamin, Butylamin, Pentylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der aliphatischen und der teilaromatischen Polyamide B) kann zusätzlich wenigstens ein mindestens dreiwertiges Amin (g) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]-hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine G) eingesetzt.

Geeignete Lactame (h) sind ε-Caprolactam, 2-Piperidon (δ-Valerolatam), 2-Pyrrolidon (γ-Butyrolactam), Capryllactam, Önanthlactam, Lauryllactam und Mischungen davon.

Geeignete ω-Aminosäuren (I) sind 6-Aminocapronsäure, 7-Aminoheptansäure, 11-Aminoundecansäure, 12-Aminododecansäure und Mischungen davon.

Geeignete von (a) bis (I) verschiedene, damit cokondensierbare Verbindungen (k) sind wenigstens dreiwertige Carbonsäuren, Diaminocarbonsäuren, etc.

Geeignete Verbindungen (k) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

In einer bevorzugten Ausführungsform ist das erfindungsgemäß eingesetzte Polyamid B) ein aliphatischen Polyamid.

Das Polyamid B) ist dann vorzugsweise ausgewählt ist unter PA 6, PA 11, PA 12, PA 46, PA 66, PA 6/66, PA 69, PA 610, PA 612, PA 96, PA 99, PA 910, PA 912, PA 1212, und Copolymeren und Gemischen davon.

Insbesondere handelt es sich bei dem aliphatischen Polyamid B) um PA 6, PA 66, PA 610 oder PA 6/66, ganz besonders bevorzugt um PA 6, PA 66 und PA 610.

In einer weiteren bevorzugten Ausführungsform ist das erfindungsgemäß eingesetzte Polyamid B) ein teilaromatisches Polyamid.

Bevorzugt ist das Polyamid B) dann ausgewählt unter PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.1/12, PA 6.T/6.I/6.10, PA 6.T/6.1/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.1/10.T/10.1, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Besonders bevorzugt ist das Polyamid B) dann ausgewählt unter PA 6.T, PA 9.T, PA 10.T, PA 12.T, PA 6.I, PA 9.I, PA 10.I, PA 12.I, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T, und Copolymeren und Gemischen davon.

Ganz besonders bevorzugt ist das Polyamid B) ausgewählt unter PA 6, PA 66, PA610 und PA 6.T/6.I.

Der Gehalt an Polyamid B) in der Polymerzusammensetzung beträgt in der Regel 10 bis 99,9 Gew.-%, bezogen auf das Gesamtgewicht der Polymerzusammensetzung. Vorzugsweise enthält die Polymerzusammensetzung 20 bis 70 Gew.-%, insbesondere 25 bis 65 Gew.-% an Polyamid B).

Die Polymerzusammensetzung kann neben der Polylefinkomponente A) und dem Polyamid B) einen faser- oder teilchenförmigen Füllstoff als Komponente C) enthalten.

Der Begriff "Füllstoff" wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Glaspartikel, z. B. Glaskugeln, nanoskalige Schichtsilikate, nanoskaliges Aluminiumoxid (Al₂O₃), nanoskaliges Titandioxid (TiO₂), dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den Polymerzusammensetzungen z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Aramidfasern, Borfasern, Metallfasern oder Kaliumtitanatfasern.

Speziell werden Schnittglasfasern eingesetzt. Insbesondere umfasst die Komponente C) Glasfaser, wobei bevorzugt Kurzfaser eingesetzt werden. Diese weisen vorzugsweise eine Länge im Bereich von 2 bis 50 mm und einem Durchmesser von 5 bis 40 µm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente C) sogenannte "flache Glasfasern". Diese weisen speziell eine ovale oder elliptische oder eine mit Einschnürung(en) versehene elliptische (sog. "Kokon"-oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der Polymerzusammensetzungen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d.h. sie machen mehr als 50 Gew.-% der Gesamtmasse der Fasern aus.

Wenn als Komponente C) Rovings von Glasfasern eingesetzt werden, weisen diese vorzugsweise einen Durchmesser von 10 bis 20 µm, bevorzugt von 12 bis 18 µm auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z.B. A-, C-, D-, M, S-, R-Glasfasern oder beliebige Mischungen davon oder Mischungen mit E-Glasfasern eingesetzt werden.

Bei Verwendung der Komponente C) in der Polymerzusammensetzung, kann die Polymerzusammensetzung 1 bis 75 Gew.-%, bezogen auf das Gesamtgewicht der Polymerzusammensetzung, an Komponente C) enthalten. Vorzugsweise wird die Komponente C) in einer Menge von 5 bis 50 Gew.-%, insbesondere 10 bis 40 Gew.-%, bezogen auf das Gesamtgewicht der Polymerzusammensetzung eingesetzt.

Die Polymerzusammensetzung kann Zusatzstoffe in einem Anteil von 0 bis 50, bevorzugt 0,1 bis 45 und besonders bevorzugt 0,2 bis 30 Gew.-%, bezogen auf das Gesamtgewicht der Polymerzusammensetzung, als Komponente D), enthalten. Vorzugsweise ist die Komponente D) ausgewählt unter Wärmestabilisatoren, Flammschutzmitteln, Lichtschutzmitteln, Gleitmitteln, Farbstoffen, Nukleierungsmitteln, Pigmenten, Metallflittern, metallbeschichteten Partikeln, Antistatika, Leitfähigkeitsadditiven, Entformungsmitteln, optischen Aufhellern und Entschäumern.

Geeignete Lichtschutzmittel (UV-Stabilisatoren, UV-Absorber oder UV-Blocker), die im Allgemeine in Mengen von 0 bis 2 Gew.-%, bezogen auf das Gesamtgewicht der Polymerzusammensetzung, eingesetzt werden, sind substituierte Resorcine, Salicylate, Benzotriazole und Benzophenone sowie sterisch gehinderte P-haltige Verbindungen, sterische gehinderte Amine und Carbodiimine.

Der Wärmestabilisator wird vorzugsweise in Mengen von 0,01 bis 3 Gew.-%, besonders bevorzugt 0,02 bis 2 Gew.-%, insbesondere 0,1 bis 1,5 Gew.-%, bezogen auf das Gesamtgewicht der Polymerzusammensetzung eingesetzt. Geeignete Wärmestabilisatoren sind Kupferverbindungen, sekundäre aromatische Amine, sterisch gehinderte Phenole, Phosphite, Phosphonite und Mischungen davon.

Sofern eine Kupferverbindung verwendet wird, beträgt die Menge an Kupfer vorzugsweise 0,003 bis 0,5, insbesondere 0,005 bis 0,3 und besonders bevorzugt 0,01 bis 0,2 Gew.-%, bezogen auf das Gesamtgewicht der Polymerzusammensetzung.

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt von 0,2 bis 1,5 Gew.-%, bezogen auf das Gesamtgewicht der Polymerzusammensetzung.

Sofern Stabilisatoren auf Basis sterisch gehinderter Phenole verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der Polymerzusammensetzung.

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der Polymerzusammensetzung.

Geeignete Kupferverbindungen sind Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O, sowie die zweiwertigen Kupferverbindungen CuCl₂, CuSO₄, CuO, Kupfer(II)-acetat oder Kupfer(II)-stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7 beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard® A), Addukte aus Phenylendiamin mit Linolen, Naugard ® 445, N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox ® PAR24: Handelsprodukt der Firma BASF SE).

Eine bevorzugte Ausführungsform des Wärmestabilisators besteht in der Kombination von organischen Hitzestabilisatoren (insbesondere Hostanox® PAR 24 und Irganox® 1010), einem Bisphenol A basiertem Epoxid (insbesondere Epikote ®1001) und einer Kupferstabilisierung auf Basis von CuI und KI. Eine kommerziell erhältliche Stabilisatormischung, bestehend aus organischen Stabilisatoren und Epoxiden ist beispielsweise Irgatec® NC66 von BASF SE. Insbesondere bevorzugt wird eine Wärmestabilisierung ausschließlich auf Basis von CuI und KI. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems ausgeschlossen. Darüber hinaus werden der Polymerzusammensetzung bevorzugt keine Übergangsmetalle der Gruppe VB, VIB, VIIB oder VIIIB des Periodensystems, wie z.B. Eisen- oder Stahlpulver, zugesetzt.

Als Komponente D) enthält die Polymerzusammensetzung vorzugsweise 0 bis 30 Gew.-%, besonders bevorzugt 0 bis 20 Gew.-%, bezogen auf das Gesamtgewicht der Polymerzusammensetzung, mindestens eines Flammschutzmittels. Wenn die Polymerzusammensetzung mindestens ein Flammschutzmittel enthält, so vorzugsweise in einer Menge von 0,01 bis 30 Gew.-%, besonders bevorzugt von 0,1 bis 20 Gew.-%, bezogen auf das Gesamtgewicht der Polymerzusammensetzung. Als Flammschutzmittel D) kommen halogenhaltige und halogenfreie Flammschutzmittel und deren Synergisten in Frage (siehe auch Gächter/Müller, 3. Ausgabe 1989 Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim, sec.) oder sec. Melaminpyrophosphat, Neopentylglycolborsäuremelamin, Guanidin und dem Fachmann bekannte Derivate davon sowie polymeres Melaminphosphat (CAS Nr.: 56386-64-2 bzw. 218768-84-4 sowie EP 1095030), Ammoniumpolyphosphat, Trishydroxyethylisocyanurat (gegebenenfalls auch Ammoniumpolyphosphat in Mischung mit Trishydroxyethylisocyanurat) (EP584567). Weitere N-haltige oder P-haltige Flammschutzmittel oder als Flammschutzmittel geeignete PN-Kondensate können der DE 10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (Für Einzelheiten und weitere Flammschutzmittel: siehe DE-A-10 2004 050 025).

Als Pigmente können anorganische Pigmente, wie Titandioxid, Ultramarinblau, Eisenoxid, ZnO, und Böhmit AIO(OH), und organische Pigmente, wie Phthalocyanine, Chinacridone oder Perylene eingesetzt werden.

Unter Farbstoffen sind alle Farbstoffe zu verstehen, die zur transparenten, halbtransparenten oder nichttransparenten Einfärbung verwendet werden können, insbesondere solche, die zur Einfärbung von Polyamiden geeignet sind. Hierunter bevorzugt sind solche, die zur transparenten oder halbtransparenten Einfärbung geeignet sind. Derartige Farbstoffe sind dem Fachmann bekannt.

Als Nukleierungsmittel können Natriumphenylphosphinat, Aluminiumoxid, Siliziumdioxid sowie bevorzugt Talkum eingesetzt werden.

Als Gleitmittel oder Entformungsmittel können die Al-, Alkali-, Erdalkalisalze oder Ester oder Amide von Fettsäuren mit 10 bis 44 C-Atomen, vorzugsweise mit 12 bis 44 C-Atomen, in einer Menge von 0 bis 3 Gew.-%, vorzugsweise 0,05 bis 3 Gew.-%, insbesondere 0,1 bis 1,5 Gew.-% und ganz besonders bevorzugt 0,1 bis 1 Gew.-%, bezogen auf das Gesamtgewicht der Polymerzusammensetzung eingesetzt werden. Vorzugsweise werden die Erdalkali und Aluminiumsalze eingesetzt, wobei Calcium, Magnesium und Aluminium besonders bevorzugt sind.

Es können auch Mischungen verschiedener Salze eingesetzt werden, wobei das Mischungsverhältnis beliebig ist.

Die Carbonsäuren können 1 - oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C- Atomen) genannt.

Die aliphatischen Alkohole können 1 - bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1 - bis 3-wertig sein. Beispiele hierfür sind Stearylamin, Ethylendiamin, Propylendiamin, Hexamethylendiamin, Di-(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat. Es können auch Mischungen verschiedener Ester oder Amide oder Ester mit Amiden in Kombination eingesetzt werden, wobei das Mischungsverhältnis beliebig ist.

Ganz besonders bevorzugt ist das Gleitmittel Ca-Stearat, Ca-Montanat oder Al-Stearat.

Besonders vorteilhaft ist die erfindungsgemäße Verwendung von Polyolefincopolymeren A) in Polymerzusammensetzungen, die wenigstens ein thermoplastisches Polyamid B) enthalten, zur Herstellung von Folien, Monofilamenten, Fasern, Garnen oder textilen Flächengebilden.

Ebenfalls besonders vorteilhaft ist die erfindungsgemäße Verwendung von Polyolefincopolymeren A) in Polymerzusammensetzungen, die wenigstens ein thermoplastisches Polyamid B) enthalten, wobei die Polymerzusammensetzung in Elektro- und Elektronikbauteilen oder für Automobil-Anwendungen im Hochtemperaturbereich eingesetzt wird.

Polymerzusammensetzungen, worin das Polyamid B) ein teilaromatisches Polyamid ist, eignen sich vorteilhaft zur Herstellung von Formteilen für Elektro- und Elektronikbauteilen und für Automobil-Anwendungen im Hochtemperaturbereich.

Im Automobilbereich ist eine Verwendung im Auto-Innenraum und im Auto-Außenraum möglich, beispielsweise für Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteile, Armaturentafeln, Lenkstockschalter, Sitzteile, Kopfstützen, Mittelkonsolen, Getriebe-komponenten, Türmodule, Türgriffe, Außenspiegelkomponnenten, Ziergitter, Dachreling, Schiebedachrahmen, Scheibenwischer sowie Karosserieaußenteile.

Ebenfalls besonders vorteilhaft ist die erfindungsgemäße Verwendung von Polyolefincopolymeren A) in Polymerzusammensetzungen, die wenigstens ein thermoplastisches Polyamid B) enthalten, wobei die Polymerzusammensetzungen Verwendung finden in Form von Formkörpern als oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die Polymerzusammensetzungen, die ein teilaromatisches Polyamid als Komponente B) enthalten, eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform ist der Einsatz als Befestigungselement elektrischer oder elektronischer Bauteile, wie Abstandshalter, Bolzen, Leisten, Einschubführungen, Schrauben und Muttern.

Insbesondere bevorzugt ist die Verwendung in Form oder als Teil eines Sockels, eines Steckverbinders, eines Steckers oder einer Buchse, die eine mechanische Zähigkeit erfordern. Beispiele solcher Funktionselemente sind Filmscharniere, Schnapphaken (Snap-in) und Federzungen.

Für den Küchen- und Haushaltsbereich ist der Einsatz zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe möglich.

Ein weiterer Gegenstand der vorliegenden Erfindung ist Verfahren zur Verminderung von Farbveränderungen in Polymerzusammensetzungen, wobei man
(i) eine Polymerzusammensetzung, enthaltend wenigstens ein thermoplastisches Polyamid B) wie zuvor definiert bereitstellt; und
(ii) ein Polyolefincopolymer A) wie zuvor definiert in die Polymerzusammensetzung einarbeitet.

Die Polymerzusammensetzungen können nach an sich bekannten Verfahren hergestellt werden, in dem man die Ausgangskomponenten A) und B) sowie gegebenenfalls die Komponenten C) und D) in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Bevorzugt ist ein Verfahren zur Verminderung von Farbveränderungen in polyamidhaltigen Polymerzusammensetzungen beim Erhitzen, wobei man
(i) wenigstens ein Polyolefincopolymer A) wie zuvor definiert und wenigstens ein thermoplastisches Polyamid B) bereitstellt;
(ii) die in (i) bereitgestellten Polymerkomponenten unter Erhalt einer Polymerzusammensetzung mischt und erhitzt, wobei eine formbare, schmelzflüssige Polymerzusammensetzung erhalten wird; und
(iii) die in (ii) erhaltene schmelzflüssige Polymerzusammensetzung einem Formgebungsprozess unterzieht,
mit der Maßgabe, dass man die Polymerzusammensetzung in Schritt (ii) auf eine Temperatur erhitzt, die wenigstens 10 °C oberhalb der höchsten Glasübergangstemperatur der in der Polymerzusammensetzung enthaltenen Polymerkomponente liegt, oder, falls wenigstens eine Polymerkomponente einen Schmelzpunkt aufweist, mindestens 10 °C oberhalb der Schmelztemperatur der höchst schmelzenden Polymerkomponente liegt.

Das Mischen und Aufschmelzen kann in einer beliebigen, geeigneten Vorrichtung, wie einem Extruder mit Kneterprofil oder einem Banbury-Mischer erfolgen.

Bei der Formgebung in Schritt (iii) kann die Polymerzusammensetzung thermisch geformt werden, beispielsweise mittels Spritzguss, Extrusion, Thermoformen oder Blasformen. Bevorzugt wird die Polymerzusammensetzung in Schritt (ii) zuerst zu einem oder mehreren Strängen geformt. Dazu können dem Fachmann bekannte Vorrichtungen verwendet werden, z. B. Extruder, die austragsseitig z. B. Lochplatten, Düsen oder Düsenplatten aufweisen. Bevorzugt wird die Polymerzusammensetzung in fließfähigem Zustand zu Strängen geformt und als fließfähiges strangförmiges Reaktionsprodukt oder nach Abkühlung einer Granulierung unterzogen.

Ein weiterer Gegenstand ist ein Verfahren zur Verwendung von wenigstens einem Polyolefincopolymeren A) wie zuvor beschrieben in einer Polymerzusammensetzung, die wenigstens ein thermoplastisches Polyamid B), wie zuvor beschrieben enthält, zur Verminderung von Farbveränderungen beim Erhitzen der Polymerzusammensetzung.

Die folgenden Beispiele dienen der Verdeutlichung der Erfindung, ohne sie in irgendeiner Weise zu beschränken.

### BEISPIELE

Es wurden folgende Komponenten eingesetzt:
Komponente A/1:
   Poly(ethylen-co-butylacrylat-co-maleinsäureanhydrid-co-acrylsäure); es wurde Lupolen® KR 1270 von BASF SE eingesetzt.
Komponente A/2:
   Poly(ethylen-co-butylacrylat-co-maleinsäureanhydrid-co-acrylsäure); es wurde Fusabond® NM 598 D von DuPont eingesetzt.
Komponente A/3:
   Copolymer des Ethylen-butylacrylat-Kautschuk, mit Maleinsäureanhydrid funktionalisiert, es wurde Fusabond® A EB 560 D von DuPont eingesetzt
Komponente B/1:
   Polyamid 66; es wurde Ultramid® A27 der BASF SE verwendet.
Komponente B/2:
   Polyamid 66; es wurde Ultramid® A34 der BASF SE verwendet.
Komponente B/3:
   Polyamid 6; es wurde Ultramid® B27 der BASF SE verwendet.
Komponente B/4:
   Polyamid 610, es wurde Ultramid® S3K der BASF SE verwendet.
Komponente B/5:
   Polyphthalamid
Komponente C/1:
   Glasfaser
Komponente D/1:
   Calciummontanat, es wurde Licomat® CaV 102 von Clariant verwendet
Komponente D/2:
   Talkum
Komponente D/3:
   Wärmestabilisator: CuI/KI Stabilisator
Komponente D/4:
   Lubricant: Luwax® OA5, BASF SE (oxidiertes Polyethylenwachs)

Die in Tabelle 1 angegebenen Komponenten wurden in einem Zweischneckenextruder ZSK25 (von Fa. Werner & Pfleiderer) homogenisiert und danach extrudiert. Die Extrudate wurden granuliert und getrocknet. Aus den Granulaten stellte man auf einer Spritzgussmaschine Prüfkörper her und bestimmte die in Tabelle 1 genannten Eigenschaften. Die Prüfkörper der Beispiele V-1, 1 und 2 sowie V-2 und 3 wurden bei einer Temperatur von 295°C extrudiert und im Spritzguss bei 290°C weiterverarbeitet. Die Prüfkörper der Beispiele V-3 und 4 sowie V-4 und 5 wurden bei einer Temperatur von 285°C extrudiert und im Spritzguss bei 280°C weiterverarbeitet. Die Prüfkörper der Beispiele V-5 und 6 sowie V-6 und 7 wurden bei 340°C extrudiert und bei 330°C weiterverarbeitet.

### Messung des Gelb-Index

Der Gelbindex (Gelbstich) oder Yellownessindex YI wurde gemäß ASTM D 1925 an spritzgegossenen Platten (10 x 10 mm; Dicke: 2 mm) bestimmt.

### Bewertung der Farbeigenschaften nach CIE-L*a*b*

Die Bestimmung der CIEL*a*b*-Daten (gemäß DIN 6174) erfolgte mit einem Farbmessgerät mit Ulbrichtkugel, Standardbeleuchtung, d65, 10° unter Einschluss der Oberflächenreflexion

**Tabelle 1: Zusammensetzung und Eigenschaften der Polymerzusammensetzung (vorangestelltes V: zum Vergleich)**

| Bsp | V-1 | 1 | 2 | V-2 | 3 | V-3 | 4 | V-4 | 5 | V-5 | 6 | V-6 | 7 |
|---|---|---|---|---|---|---|---|---|---|---|---|---|---|
| A/1 | | 6,0 | | | | | 6,0 | | | | | | |
| A/2 | | | 6,0 | | 6,0 | | | | 6,0 | | | | |
| A/3 | | | | | | | | | | | 3,0 | | 4,0 |
| B/1 | 69,75 | 63,75 | | 69,75 | 63,75 | | | | | | | | |
| B/2 | | | 63,75 | | | | | | | | | | |
| B/3 | | | | | | 69,75 | 63,75 | | | | | | |
| B/4 | | | | | | | | 69,75 | 63,75 | | | | |
| B/5 | | | | | | | | | | 63,80 | 60,80 | 64,30 | 60,3 |
| C/1 | 30 | 30 | 30 | 30 | 30 | 30 | 30 | 30 | 30 | 35 | 35 | 35 | 35 |
| D/1 | 0,25 | 0,25 | 0,25 | 0,25 | 0,25 | 0,25 | 0,25 | 0,25 | 0,25 | 0,35 | 0,35 | 0,35 | 0,35 |
| D/2 | | | | | | | | | | 0,05 | 0,05 | 0,05 | 0,05 |
| D/3 | | | | | | | | | | 0,3 | 0,3 | 0,3 | 0,3 |
| D/4 | | | | | | | | | | 0,50 | 0,50 | | |
| L* | 74,8 | 80,7 | 83,1 | 68,7 | 79,7 | 69,6 | 82,0 | 66,3 | 79,9 | 58,3 | 77,0 | 67,8 | 87,0 |
| a* | -0,3 | -0,4 | -1,3 | -2,0 | -1,6 | -3,7 | -3,2 | -4,6 | -4,8 | 3,5 | 0,0 | -2,1 | -1,7 |
| b* | 28,6 | 24,0 | 21,8 | 17,4 | 19,3 | 28,9 | 24,9 | 5,8 | 6,3 | 23,3 | 22,7 | 23,4 | 18,2 |
| YI | 56,8 | 46,6 | 41,1 | 37,8 | 37,8 | 56,8 | 45,0 | 10,1 | 9,6 | 61,1 | 46,2 | 49,6 | 33,6 |

Diese Beispiele belegen die geringere Eigenfarbe der erfindungsgemäß additivierten Polyamid-haltigen Polymerzusammensetzungen im Vergleich zu nicht erfindungsgemäß additivierten Polyamid-haltigen Polymerzusammensetzungen. Es werden somit Polyamid-haltige Polymerzusammensetzungen mit verbesserten optischen Eigenschaften (höherer Weißgrad, niedrigerer Gelbindex) erhalten.

## Patentansprüche

1. Verwendung von Polyolefincopolymeren A) zur Verminderung von Farbveränderungen beim Erhitzen von Polymerzusammensetzungen, die wenigstens ein thermoplastisches Polyamid B) enthalten, wobei das Polyolefincopolymer A) wenigstens ein ethylenisch ungesättigtes Monomere Ma und wenigstens ein monoethylenisch ungesättigtes Monomer Mb einpolymerisiert enthält, wobei
Monomer Ma ausgewählt ist unter
C₂-C₁₀-Alkenen und vinylaromatischen Verbindungen der Formel (I) 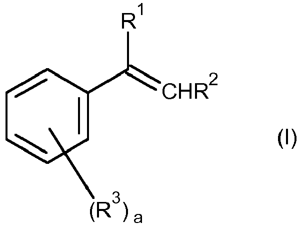 worin
R¹ und R² unabhängig voneinander ausgewählt sind unter Wasserstoff, C₁-C₁₀-Alkyl, C₃-C₁₂-Cycloalkyl und Phenyl, wobei C₃-C₁₂-Cycloalkyl und Phenyl unsubstituiert sind oder ein- oder mehrfach durch C₁-C₁₀-Alkyl substituiert sind;
R³ für C₁-C₁₀-Alkyl, C₃-C₁₂-Cycloalkyl und Phenyl steht, wobei C₃-C₁₂-Cycloalkyl und Phenyl unsubstituiert sind oder ein- oder mehrfach durch C₁-C₁₀-Alkyl substituiert sind; und
a für 0, 1 oder 2 steht;
und
Monomer Mb ausgewählt ist unter
monoethylenisch ungesättigten C₃-C₂₃-Monocarbonsäuren;
Estern monoethylenisch ungesättigter C₃-C₂₃-Monocarbonsäuren mit Verbindungen der Formel (II)
R⁴-OH (II),
worin
R⁴ für C₁-C₁₀-Alkyl, C₃-C₁₂-Cycloalkyl oder Phenyl steht, wobei C₃-C₁₂-Cycloalkyl und Phenyl unsubstituiert sind oder ein- oder mehrfach durch C₁-C₁₀-Alkyl substituiert sind;
N-C₁-C₈-Alkyl-substituierte Amiden von monoethylenisch ungesättigten C₃-C₂₃-Monocarbonsäuren;
monoethylenisch ungesättigten C₄-C₂₀-Dicarbonsäuren;
monoethylisch ungesättigten C₄-C₂₀-Dicarbonsäureanhydriden;
Monoestern monoethylenisch ungesättigter C₄-C₂₀-Dicarbonsäuren mit Verbindungen der Formel (II);
Diestern monoethylenisch ungesättigter C₄-C₂₀-Dicarbonsäuren mit Verbindungen der Formel (II);
Vinylestern von C₁-C₁₀-Monocarbonsäuren;
Allylestern von C₁-C₁₀-Monocarbonsäuren;
monoethylenisch ungesättigten Oxiranen der Formel (III); und
monoethylenisch ungesättigten Oxiranen der Formel (IV) 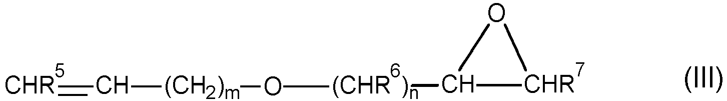 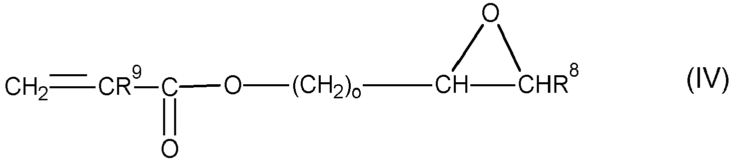 worin
R⁵, R⁶, R⁷, R⁸ und R⁹ unabhängig voneinander ausgewählt sind unter Wasserstoff und C₁-C₆-Alkyl;
m für eine ganze Zahl von 0 bis 20 steht;
n für eine ganze Zahl von 0 bis 10 steht; und
o für eine ganze Zahl von 0 bis 5 steht.

2. Verwendung nach Anspruch 1, wobei das Polyolefincopolymer A) zusätzlich wenigstens ein Dien mit 4 bis 25 Kohlenstoffatomen als Monomer Mc enthält.

3. Verwendung nach Anspruch 1 oder 2, wobei das Monomer Ma ausgewählt ist unter Ethen, Propen, 1-Buten und Mischungen davon.

4. Verwendung nach einem der vorhergehenden Ansprüche, wobei das Monomer Mb ausgewählt ist unter monoethylenisch ungesättigten C₃-C₆-Monocarbonsäuren, Estern monoethylenisch ungesättigter C₃-C₆-Monocarbonsäuren mit C₁-C₁₀-Alkanolen, monoethylisch ungesättigten C₄-C₁₀-Dicarbonsäureanhydriden, und Verbindungen der Formel IV und Mischungen davon.

5. Verwendung nach Anspruch 4, wobei das Monomer Mb ausgewählt ist unter Acrylsäure, Methacrylsäure, Acrylsäure-Ci-Cio-alkylestern, Methacrylsäure-Ci-Cio-alkylestern, Maleinsäureanhydrid, Bicyclo[2.2.1]hept-5-en-2,3-dicarbonsäureanhydrid, das unsubstituiert ist oder 1, 2 oder 3 C₁-C₄-Alkylgruppen trägt, und Mischungen davon.

6. Verwendung nach einem der vorhergehenden Ansprüche, worin das Monomer Mc ausgewählt ist unter Isopren, Butadien, Hexa-1,5-dien, 5-Ethylidennorbornen und Dicyclopentadien.

7. Verwendung nach einem der vorhergehenden Ansprüche, wobei das Polyamid B) ausgewählt ist unter PA 6, PA 66, PA610, PA 6.T, PA 9.T, PA8.T, PA 10.T, PA 12.T, PA 6.I, PA8.I, PA 9.I, PA 10.I, PA 12.I, PA 6.T/6, PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.1/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.1/8.T/8.1, PA 6.T/6.1/10.T/10.1,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T,
PA 6.T/12.T/IPDA.T, PA 6.T/10.T/PACM.T, PA 6.T/12.T/PACM.T,
PA 10.T/IPDA.T, PA 12.T/IPDA.T und Copolymeren und Gemischen davon, vorzugsweise ausgewählt unter PA 6, PA 66, PA 610 und PA 6.T/6.I und Gemischen davon.

8. Verwendung nach einem der vorhergehenden Ansprüche, wobei das Polyolefincopolymer A) in einer Menge von 0,1 bis 30 Gew.-%, bezogen auf das Gesamtgewicht der Polymerzusammensetzung, eingesetzt wird.

9. Verwendung nach einem der vorhergehenden Ansprüche, wobei die Polymerzusammensetzung zusätzlich wenigstens einen faser- oder teilchenförmigen Füllstoff als Komponente C) enthält.

10. Verwendung nach einem der vorhergehenden Ansprüche, wobei die Polymerzusammensetzung wenigstens einen weiteren Zusatzstoff als Komponente D), vorzugsweise ausgewählt unter Wärmestabilisatoren, Flammschutzmitteln, Lichtschutzmitteln, Gleitmitteln, Farbstoffen, Nukleierungsmitteln, Pigmenten, Metallflittern, metallbeschichteten Partikeln, Antistatika, Leitfähigkeitsadditiven, Entformungsmitteln, optischen Aufhellern und Entschäumern enthält.

11. Verwendung nach einem der Ansprüche 1 bis 10, wobei die Polymerzusammensetzung zur Herstellung von Folien, Monofilamenten, Fasern, Garnen oder textilen Flächengebilden eingesetzt wird.

12. Verwendung nach einem der Ansprüche 1 bis 10, wobei die Polymerzusammensetzung in Elektro- und Elektronikbauteilen oder für Automobil-Anwendungen im Hochtemperaturbereich eingesetzt wird.

13. Verwendung nach Anspruch 12 für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

14. Verfahren zur Verminderung von Farbveränderungen in einer Polymerzusammensetzung beim Erhitzen, wobei man
(i) wenigstens ein Polyolefincopolymer A) wie in einem der Ansprüche 1 bis 6 definiert und wenigstens ein thermoplastisches Polyamid B) bereitstellt;
(ii) die in (i) bereitgestellten Polymerkomponenten unter Erhalt einer Polymerzusammensetzung mischt und erhitzt, wobei eine formbare, schmelzflüssige Polymerzusammensetzung erhalten wird; und
(iii) die in (ii) erhaltene schmelzflüssige Polymerzusammensetzung einem Formgebungsprozess unterzieht,
mit der Maßgabe, dass man die Polymerzusammensetzung in Schritt (ii) auf eine Temperatur erhitzt, die wenigstens 10 °C oberhalb der höchsten Glasübergangstemperatur der in der Polymerzusammensetzung enthaltenen Polymerkomponente liegt, oder, falls wenigstens eine Polymerkomponente einen Schmelzpunkt aufweist, mindestens 10 °C oberhalb der Schmelztemperatur der höchst schmelzenden Polymerkomponente liegt.

15. Verfahren zur Verwendung wenigstens eines Polyolefincopolymeren A) nach einem der Ansprüche 1 bis 6 in einer Polymerzusammensetzung, die wenigstens ein thermoplastisches Polyamid B) enthält, zur Verminderung von Farbveränderungen beim Erhitzen der Polymerzusammensetzung.

## Claims

1. The use of polyolefin copolymers A) for reducing color changes in the course of heating of polymer compositions comprising at least one thermoplastic polyamide B), wherein the polyolefin copolymer A) comprises at least one ethylenically unsaturated monomer Ma and at least one monoethylenically unsaturated monomer Mb in copolymerized form, wherein
monomer Ma is selected from
C₂-C₁₀-alkenes and vinylaromatic compounds of the formula (I) 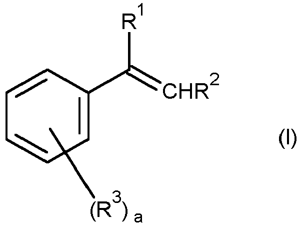 in which
R¹ and R² are each independently selected from hydrogen, C₁-C₁₀-alkyl, C₃-C₁₂-cycloalkyl and phenyl, where C₃-C₁₂-cycloalkyl and phenyl are unsubstituted or mono- or polysubstituted by C₁-C₁₀-alkyl;
R³ is C₁-C₁₀-alkyl, C₃-C₁₂-cycloalkyl and phenyl, where C₃-C₁₂-cycloalkyl and phenyl are unsubstituted or mono- or polysubstituted by C₁-C₁₀-alkyl; and
a is 0, 1 or 2;
and
monomer Mb is selected from
monoethylenically unsaturated C₃-C₂₃ monocarboxylic acids;
esters of monoethylenically unsaturated C₃-C₂₃ monocarboxylic acids with compounds of formula (II)
R⁴-OH (II),
in which
R⁴ is C₁-C₁₀-alkyl, C₃-C₁₂-cycloalkyl or phenyl, where C₃-C₁₂-cycloalkyl and phenyl are unsubstituted or mono- or polysubstituted by C₁-C₁₀-alkyl;
N-C₁-C₈-alkyl-substituted amides of monoethylenically unsaturated C₃-C₂₃ monocarboxylic acids; monoethylenically unsaturated C₄-C₂₀ dicarboxylic acids;
monoethylenically unsaturated C₄-C₂₀ dicarboxylic anhydrides;
monoesters of monoethylenically unsaturated C₄-C₂₀ dicarboxylic acids with compounds of formula (II); diesters of monoethylenically unsaturated C₄-C₂₀ dicarboxylic acids with compounds of formula (II); vinyl esters of C₁-C₁₀ monocarboxylic acids; allyl esters of C₁-C₁₀ monocarboxylic acids;
monoethylenically unsaturated oxiranes of the formula (III); and
monoethylenically unsaturated oxiranes of the formula (IV) 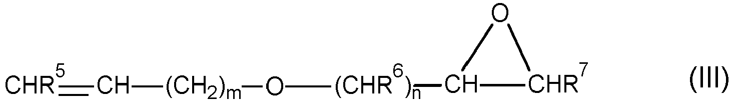 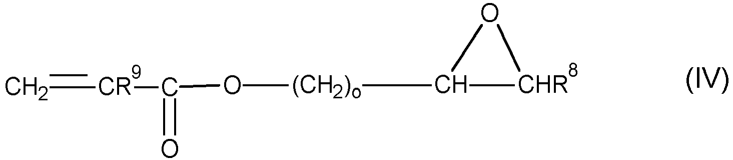 in which
R⁵, R⁶, R⁷, R⁸ and R⁹ are each independently selected from hydrogen and C₁-C₆-alkyl;
m is an integer from 0 to 20;
n is an integer from 0 to 10; and
o is an integer from 0 to 5.

2. The use according to claim 1, wherein the polyolefin copolymer A) additionally comprises at least one diene having 4 to 25 carbon atoms as monomer Mc.

3. The use according to claim 1 or 2, wherein the monomer Ma is selected from ethene, propene, 1-butene and mixtures thereof.

4. The use according to any of the preceding claims, wherein the monomer Mb is selected from monoethylenically unsaturated C₃-C₆ monocarboxylic acids, esters of monoethylenically unsaturated C₃-C₆ monocarboxylic acids with C₁-C₁₀-alkanols, monoethylenically unsaturated C₄-C₁₀ dicarboxylic anhydrides, and compounds of the formula IV and mixtures thereof.

5. The use according to claim 4, wherein the monomer Mb is selected from acrylic acid, methacrylic acid, C₁-C₁₀-alkyl acrylates, C₁-C₁₀-alkyl methacrylates, maleic anhydride, bicyclo[2.2.1]hept-5-en-2,3-dicarboxylic anhydride which is unsubstituted or bears 1, 2 or 3 C₁-C₄-alkyl groups, and mixtures thereof.

6. The use according to any of the preceding claims, in which the monomer Mc is selected from isoprene, butadiene, hexa-1,5-diene, 5-ethylidenenorbornene and dicyclopentadiene.

7. The use according to any of the preceding claims, wherein the polyamide B) is selected from PA 6, PA 66, PA610, PA 6.T, PA 9.T, PA8.T, PA 10.T, PA 12.T, PA 6.1, PA 8.I, PA 9.1, PA 10.I, PA 12.1, PA 6.T/6, PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T,
PA 10.T/IPDA.T, PA 12.T/IPDA.T and copolymers and mixtures thereof, preferably selected from PA 6, PA 66, PA 610 and PA 6.T/6.I and mixtures thereof.

8. The use according to any of the preceding claims, wherein the polyolefin copolymer A) is used in an amount of 0.1% to 30% by weight, based on the total weight of the polymer composition.

9. The use according to any of the preceding claims, wherein the polymer composition additionally comprises at least one fibrous or particulate filler as component C).

10. The use according to any of the preceding claims, wherein the polymer composition comprises at least one further additive as component D), preferably selected from heat stabilizers, flame retardants, light stabilizers, lubricants, dyes, nucleating agents, pigments, metal flakes, metal-coated particles, antistats, conductivity additives, demolding agents, optical brighteners and defoamers.

11. The use according to any of claims 1 to 10, wherein the polymer composition is used for production of films, monofilaments, fibers, yarns or textile fabrics.

12. The use according to any of claims 1 to 10, wherein the polymer composition is used in electrical and electronic components or for high-temperature automotive applications.

13. The use according to claim 12 in soldering operations under lead-free conditions (lead free soldering), for production of plug connectors, microswitches, microbuttons and semiconductor components, especially reflector housings of light-emitting diodes (LEDs).

14. A method of reducing color changes in a polymer composition in the course of heating, wherein
(i) at least one polyolefin copolymer A) as defined in any of claims 1 to 6 and at least one thermoplastic polyamide B) are provided;
(ii) the polymer components provided in (i) are mixed and heated to obtain a polymer composition, giving a moldable molten polymer composition; and
(iii) the molten polymer composition obtained in (ii) is subjected to a molding operation,
with the proviso that the polymer composition is heated in step (ii) to a temperature at least 10°C above the highest glass transition temperature of the polymer component present in the polymer composition or, if at least one polymer component has a melting point, at least 10°C above the melting temperature of the highest-melting polymer component.

15. A method of using at least one polyolefin copolymer A) according to any of claims 1 to 6 in a polymer composition comprising at least one thermoplastic polyamide B) for reducing color changes in the course of heating of the polymer composition.

## Revendications

1. Utilisation de copolymères de polyoléfine A) pour réduire les changements de couleur lors du chauffage de compositions polymères qui contiennent au moins un polyamide thermoplastique B), le copolymère de polyoléfine A) contenant au moins un monomère éthyléniquement insaturé Ma et au moins un monomère monoéthyléniquement insaturé Mb,
le monomère Ma étant choisi parmi
les alcènes en C₂-C₁₀ et les composés aromatiques de vinyle de formule (I) 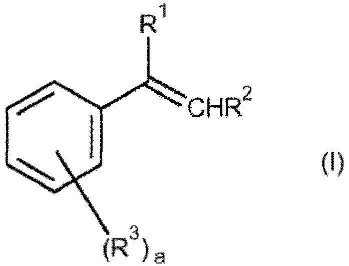 dans laquelle
R¹ et R² sont choisis indépendamment l'un de l'autre parmi hydrogène, alkyle en C₁-C₁₀, cycloalkyle en C₃-C₁₂ et phényle, le cycloalkyle en C₃-C₁₂ et le phényle étant non substitués ou étant substitués une ou plusieurs fois par alkyle en C₁-C₁₀ ;
R³ représente alkyle en C₁-C₁₀, cycloalkyle en C₃-C₁₂ et phényle, le cycloalkyle en C₃-C₁₂ et le phényle étant non substitués ou étant substitués une ou plusieurs fois par alkyle en C₁-C₁₀ ; et
a représente 0, 1 ou 2 ;
et
le monomère Mb étant choisi parmi
les acides monocarboxyliques en C₃-C₂₃ monoéthyléniquement insaturés ;
les esters d'acides monocarboxyliques en C₃-C₂₃ monoéthyléniquement insaturés avec des composés de formule (II)
R⁴-OH (II)
dans laquelle
R⁴ représente alkyle en C₁-C₁₀, cycloalkyle en C₃-C₁₂ et phényle, le cycloalkyle en C₃-C₁₂ et le phényle étant non substitués ou étant substitués une ou plusieurs fois par alkyle en C₁-C₁₀ ;
les amides à substitution N-alkyle en C₁-C₈ d'acides monocarboxyliques en C₃-C₂₃ monoéthyléniquement insaturés ;
les acides dicarboxyliques en C₄-C₂₀ monoéthyléniquement insaturés ;
les anhydrides d'acides dicarboxyliques en C₄-C₂₀ monoéthyléniquement insaturés ;
les monoesters d'acides dicarboxyliques en C₄-C₂₀ monoéthyléniquement insaturés avec des composés de formule (II) ;
les diesters d'acides dicarboxyliques en C₄-C₂₀ monoéthyléniquement insaturés avec des composés de formule (II) ;
les esters vinyliques d'acides monocarboxyliques en C₁-C₁₀ ;
les esters allyliques d'acides monocarboxyliques en C₁-C₁₀ ;
les oxiranes monoéthyléniquement insaturés de formule (III) ; et
les oxiranes monoéthyléniquement insaturés de formule (IV) 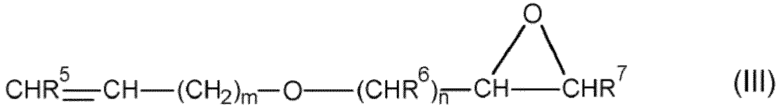 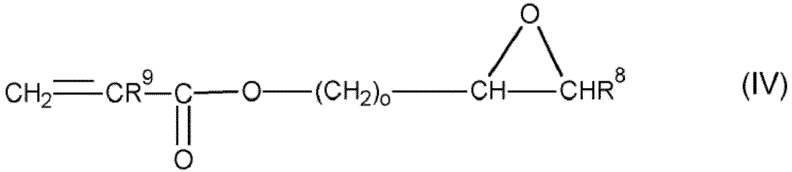 dans lesquelles
R⁵, R⁶, R⁷, R⁸ et R⁹ sont choisis indépendamment les uns des autres parmi hydrogène et alkyle en C₁-C₆ ;
m représente un nombre entier de 0 à 20 ;
n représente un nombre entier de 0 à 10 ; et
o représente un nombre entier de 0 à 5.

2. Utilisation selon la revendication 1, dans laquelle le copolymère de polyoléfine A) contient en outre au moins un diène de 4 à 25 atomes de carbone en tant que monomère Mc.

3. Utilisation selon la revendication 1 ou 2, dans laquelle le monomère Ma est choisi parmi l'éthène, le propène, le 1-butène et leurs mélanges.

4. Utilisation selon l'une quelconque des revendications précédentes, dans laquelle le monomère Mb est choisi parmi les acides monocarboxyliques en C₃-C₆ monoéthyléniquement insaturés, les esters d'acides monocarboxyliques en C₃-C₆ monoéthyléniquement insaturés avec des alcanols en C₁-C₁₀, les anhydrides d'acides dicarboxyliques en C₄-C₁₀ monoéthyléniquement insaturés et les composés de formule IV et leurs mélanges.

5. Utilisation selon la revendication 4, dans laquelle le monomère Mb est choisi parmi l'acide acrylique, l'acide méthacrylique, les esters alkyliques en C₁-C₁₀ de l'acide acrylique, les esters alkyliques en C₁-C₁₀ de l'acide méthacrylique, l'anhydride de l'acide maléique, l'anhydride de l'acide bicyclo[2.2.1]hept-5-ène-2,3-dicarboxylique, qui est non substitué ou porte 1, 2 ou 3 groupes alkyle en C₁-C₄, et leurs mélanges.

6. Utilisation selon l'une quelconque des revendications précédentes, dans laquelle le monomère Mc est choisi parmi l'isoprène, le butadiène, l'hexa-1,5-diène, le 5-éthylidène-norbornène et le dicyclopentadiène.

7. Utilisation selon l'une quelconque des revendications précédentes, dans laquelle le polyamide B) est choisi parmi PA 6, PA 66, PA610, PA 6.T, PA 9.T, PA 8.T, PA 10.T, PA 12.T, PA 6.I, PA 8.I, PA 9.I, PA 10.I PA 12.I, PA 6.T/6, PA 6.T/10, PA 6.T/12, PA 6.T/6.I, PA 6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T et leurs copolymères et mélanges, de préférence choisi parmi PA 6, PA 66, PA 610 et PA 6.T/6.I et leurs mélanges.

8. Utilisation selon l'une quelconque des revendications précédentes, dans laquelle le copolymère de polyoléfine A) est utilisé en une quantité de 0,1 à 30 % en poids, par rapport au poids total de la composition polymère.

9. Utilisation selon l'une quelconque des revendications précédentes, dans laquelle la composition polymère contient en outre au moins une charge fibreuse ou particulaire en tant que composant C).

10. Utilisation selon l'une quelconque des revendications précédentes, dans laquelle la composition polymère contient au moins un additif supplémentaire en tant que composant D), de préférence choisi parmi les stabilisateurs thermiques, les agents ignifuges, les agents photoprotecteurs, les lubrifiants, les colorants, les agents de nucléation, les pigments, les paillettes métalliques, les particules revêtues de métal, les antistatiques, les additifs de conductivité, les agents de démoulage, les azurants optiques et les antimousses.

11. Utilisation selon l'une quelconque des revendications 1 à 10, dans laquelle la composition polymère est utilisée pour la fabrication de films, de monofilaments, de fibres, de fils ou de structures textiles plates.

12. Utilisation selon l'une quelconque des revendications 1 à 10, dans laquelle la composition polymère est utilisée dans des composants électriques et électroniques ou pour des applications automobiles dans une zone à température élevée.

13. Utilisation selon la revendication 12, pour l'utilisation dans des procédés de soudage en conditions sans plomb (lead free soldering), pour la fabrication de connecteurs, de micro-contacteurs, de micro-palpeurs et de composants semi-conducteurs, notamment de boîtiers de réflecteurs de diodes électroluminescentes (LED).

14. Procédé de réduction des changements de couleur dans une composition polymère lors du chauffage, selon lequel
(i) au moins un copolymère de polyoléfine A) tel que défini dans l'une quelconque des revendications 1 à 6 et au moins un polyamide thermoplastique B) sont préparés ;
(ii) les composants polymères préparés en (i) sont mélangés et chauffés pour obtenir une composition polymère, une composition polymère liquide à l'état fondue façonnable étant obtenue ; et
(iii) la composition polymère liquide à l'état fondu obtenue en (ii) est soumise à un procédé de façonnage,
à condition que la composition polymère soit portée à l'étape (ii) à une température qui se situe au moins 10 °C au-dessus de la température de transition vitreuse la plus élevée des composants polymères contenus dans la composition polymère ou, si au moins un composant polymère présente un point de fusion, au moins 10 °C au-dessus de la température de fusion du composant polymère ayant la température de fusion la plus élevée.

15. Procédé d'utilisation d'au moins un copolymère de polyoléfine A) selon l'une quelconque des revendications 1 à 6 dans une composition polymère, qui contient au moins un polyamide thermoplastique B), pour réduire les changements de couleur lors du chauffage de la composition polymère.
